# EUROPEAN PATENT SPECIFICATION

(11) **EP 3 705 365 B1**
(45) Date of publication and mention of the grant of the patent: **08.12.2021**
(21) Application number: 19202939.5
(22) Date of filing: 14.10.2019
(51) Int. Cl.: B60T 1/04, B60T 7/10, B60T 11/04, A61H 3/04

(54) **HIDDEN BRAKING DEVICE**
VERBORGENE BREMSVORRICHTUNG
DISPOSITIF DE FREINAGE DISSIMULÉ

(43) Date of publication of application: 09.09.2020
(73) Proprietor: Zhong, Jiang-Ping, Dongguan City, Guangdong Province (CN)
(72) Inventor: Zhong, Jiang-Ping, Dongguan City, Guangdong Province (CN)
(74) Representative: Cabinet Chaillot

(56) References cited:
- US-A1- 2014 076 090
- US-B1- 8 474 838

## Description

### BACKGROUND OF THE INVENTION

### 1. Field of the Invention

This invention relates to a braking device and relates particularly to a hidden braking device disposed inside a frame.

### 2. Description of the Related Art

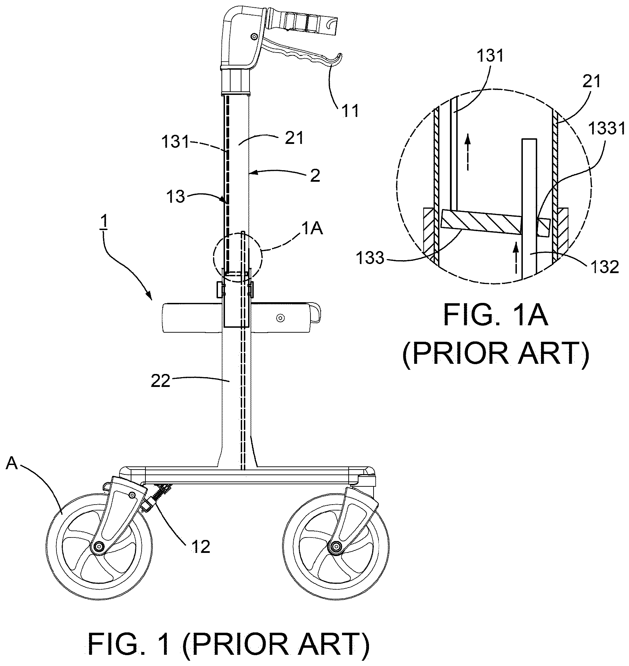

Referring to Fig. 1 and Fig. **1A****,** a conventional hidden braking device 1 includes a brake handle **11,** a brake member **12** adapted to control a rotation of a wheel set **A,** a connecting member **13** connected to the brake handle **11** and the brake member **12,** and a main frame **2** connected to the brake handle **11** and the wheel set **A.** The connecting member **13** is disposed inside the main frame **2** which has a lower frame **22** and an upper frame **21** sliding relative to the lower frame **22.** The connecting member **13** has an upper stem **131** connected to the brake handle **11,** a lower stem **132** connected to the brake member **12,** and a connecting unit **133** respectively connected to the upper stem **131** and the lower stem **132.** The connecting unit **133** has a hole **1331** which allows the lower stem **132** to penetrate therethrough. The upper stem **131** is fixed to the connecting unit **133** and opposite to the lower stem **132.**

While adjusting a full length of the main frame **2** by expanding or contracting the upper frame **21** and the lower frame **22,** the lower stem **132** slides within the hole **1331,** and synchronously the upper stem **131** is moved to a proper place. While executing a braking action through the brake handle **11,** the user grips the brake handle **11** to simultaneously pull the upper stem **131** upwards and allow the connecting unit **133** to become inclined in order that the hole **1331** is engaged with the lower stem **132.** Therefore, the lower stem **132** can be moved with the upward movement of the upper stem **131,** and further drive the brake member **12** to execute the braking action. However, the repeated braking actions cause the hole **1331** to be worn away easily and cause a size of the hole **1331** to be enlarged gradually. The enlarged hole **1331** cannot be engaged with the lower stem **132** effectively, and therefore the lower stem **132** cannot be moved by the connecting unit **133** when the connecting unit **133** is pulled upwards by the upper stem **131,** and that causes the lower stem **132** cannot drive the brake member **12** smoothly to result in the ineffective braking action. Hence, the inconvenience of use is increased, and that needs to be improved.

Further, the user has to grip the brake handle **11** continuously to ensure that the brake member **12** executes the braking action uninterruptedly. When the user releases the brake handle **11,** the brake member **12** is also released to stop the braking action. Thus, the braking action of the brake member **12** cannot be maintained if the user releases the brake handle **11,** and that causes the inconvenience of use and also requires to be improved.

US 2014/076090 A1 discloses a hidden braking assembly providing a connecting unit disposed inside a main frame. The connecting unit includes an upper stem connected to a brake handle, a lower stem connected to a brake unit, and an adjusting set fixed to the lower stem and penetrated by the upper stem.

US 8 474 838 B1 discloses a hidden braking device installed on an adjustable walking aid and having a connecting unit installed in the walking aid.

In particular, US 2014/076090 A1 discloses a hidden braking assembly according to the preamble of claim 1.

### SUMMARY OF THE INVENTION

The object of this invention is to provide a hidden braking device capable of attaining a quick adjustment of a full length of a main frame and increasing the convenience of use and adjustment.

The hidden braking device of this invention comprises a brake handle, a brake member adapted to control a stop of a wheel set, a connecting member connected to the brake handle and the brake member, and a main frame disposed between the brake handle and the wheel set. The connecting member is disposed inside the main frame which has a lower frame and an upper frame sliding relative to the lower frame. The connecting member has an upper stem connected to the brake handle, a lower stem connected to the brake member, a locking set disposed on the lower frame, and an adjusting set connected to the upper stem and the lower stem. The upper stem is formed with a penetrating sliding trough allowing an insertion of the lower stem and a fixing trough with a plurality of fixing notches formed on a surface of the sliding trough. The locking set has a locking body and a locking unit pivotally connected to the locking body. The adjusting set has a fixing rod disposed on the lower frame, a main base fixed to the fixing rod, an operating unit movably disposed inside the main base and allowing insertions of the upper stem and the lower stem, a positioning case connected to the lower stem and located in the operating unit, an engaging case engaged with the positioning case, an elastic unit positioned between the positioning case and the engaging case and inserted into the sliding trough to be engaged with the fixing notches, and a first spring unit disposed on the operating unit. While adjusting a full length of the main frame, the locking unit is released to allow the first spring unit to push the operating unit to the engaging case in order to fix the lower stem. And then, the upper frame is moved by an outer force to synchronously move the upper stem, and further carry out a movement of the elastic unit caused by the engagement of the elastic unit and the fixing notches . The movement of the elastic unit is then restricted by the fixed engaging case to reduce the engaging force, and that facilitates the adjustment. Therefore, the elastic unit is forced to stay motionless in order that only the upper stem is moved. After the adjustment is completed, the locking unit is fastened to push the operating unit so as to break the engagement of the operating unit and the engaging case and release the lower stem whereby the lower stem and the upper stem can be moved simultaneously. Thus, a normal braking action can be executed through pressing the brake handle to synchronously pull the upper stem and the lower stem upwards to further stimulate the brake member. Hence, the full length of the main frame is adjusted quickly and the convenience of use is increased.

Preferably, the hidden braking device further comprises a brake control set disposed between the upper stem and the brake handle. The brake handle has a front end, a rear end opposite thereof, and a slot formed between the front end and the rear end. The rear end is movable between a neutral position, a normal braking position, and a brake locking position. The brake control set has a housing fixed to the upper frame, a shaft fixed to the housing and penetrating the slot, a securing unit disposed inside the housing, a connecting line connected to the upper stem and the housing and driven by the brake handle. The securing unit has a first limiting recess and a second limiting recess formed above the first limiting recess. The front end of the brake handle moves from the first limiting recess to the second limiting recess when the rear end of the brake handle assumes the brake locking position.

Preferably, the hidden braking device further comprises a pulley disposed on the brake handle. The connecting line passes around the pulley and then being fixed to the housing.

Preferably, the brake control set has a stem base disposed on the upper stem and connected to the connecting line and a second spring unit disposed between the stem base and the housing.

Preferably, the hidden braking device further comprises an engaging recess recessedly formed on a surface of the engaging case and a protruding part projecting from a surface of the operating unit. The protruding part is adapted to be inserted into the engaging recess when the operating unit is pushed by the first spring unit.

### BRIEF DESCRIPTION OF THE DRAWINGS

Fig. 1 is a schematic view showing a conventional hidden braking device;
Fig. **1A** is an enlarged view of the encircled portion 1A indicated in Fig. 1;
Fig. **2** is a schematic view showing a first preferred embodiment of this invention;
Fig. **2A** is an enlarged view of the encircled portion 2A indicated in Fig. 2;
Fig. **3** is an exploded view showing the connecting member;
Fig. **4** is a cross-sectional showing that the elastic unit is engaged with the fixing notches to thereby connect the upper stem and the lower stem together;
Fig. **5** is a cross-sectional showing that the locking unit is released to allow the first spring unit to push the operating unit to thereby position the engaging case and fix the lower stem;
Fig. **6** is a cross-sectional showing that the first end of the elastic unit is constrained by the first engaging part of the engaging case when the upper stem is moved upwards;
Fig. **7** is a cross-sectional showing that the second end of the elastic unit is constrained by the second engaging part of the engaging case when the upper stem is moved downwards;
Fig. **8** is a cross-sectional showing that the locking unit is fastened to push the operating unit and release the engaging case whereby the lower stem is movable with a movement of the upper stem;
Fig. **9** is a schematic view showing a second preferred embodiment of this invention;
Fig. **9A** is an enlarged view of the encircled portion 9A indicated in Fig. 9 and showing a neutral position of the brake handle;
Fig. **10** is a cross-sectional view showing that the brake handle is engaged with the first limiting recess and griped to execute a normal braking action; and
Fig. **11** is a cross-sectional view showing that the brake handle is engaged with the second limiting recess to execute an uninterrupted braking action.

### DETAILED DESCRIPTION OF THE PREFERRED EMBODIMENTS

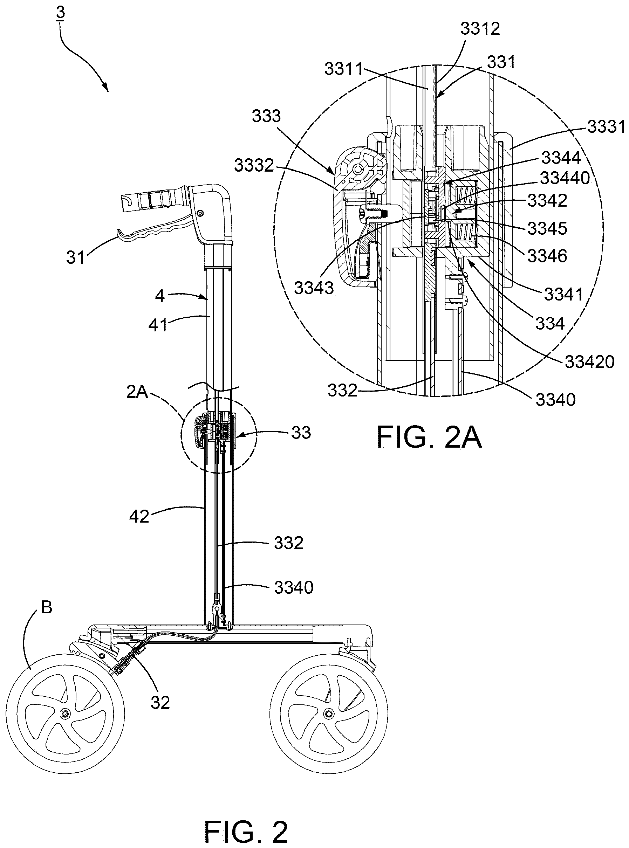

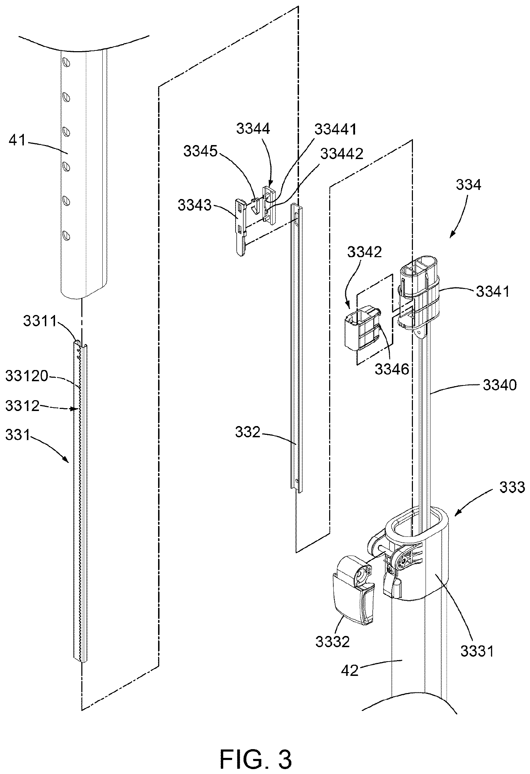

Referring to Fig. **2** and Fig. **2A****,** a first preferred embodiment of a hidden braking device **3** of this invention includes a brake handle **31,** a brake member **32** adapted to control a rotation of a wheel set **B,** a connecting member **33** connected to the brake handle **31** and the brake member **32,** and a main frame **4** disposed between the brake handle **31** and the wheel set **B.** The connecting member **33** is disposed inside the main frame **4** which includes an upper frame **41** and a lower frame **42.** The upper frame **41** is capable of sliding relative to the lower frame **42** so that the upper frame **41** and the lower frame **42** can be expanded or contracted to attain an adjustment of a full length of the main frame **4.** The connecting member **33** has an upper stem **331** connected to the brake handle **31,** a lower stem **332** connected to the brake member **32,** a locking set **333** fixed to an end of the lower frame **42** where the upper frame **41** is inserted, and an adjusting set **334** connected to the upper stem **331** and the lower stem **332.** The upper stem **331** has a sliding trough **3311** penetrating therethrough and adapted for an insertion of the lower stem **332,** and a fixing trough **3312** formed with a plurality of fixing notches **33120** formed on a surface of the sliding trough **3311** as shown in Fig. **3****.** Referring to Fig. **2A** and Fig. **3****,** the locking set **333** has a locking body **3331** fixed on the end of the lower frame **42,** and a locking unit **3332** pivotally connected to the locking body **3331** and capable of triggering a movement of an operating unit **3342** of the adjusting set **334.** The adjusting set **334** has a fixing rod **3340** fixed to the lower frame **42,** a main base **3341** fixed to the fixing rod **3340,** the operating unit **3342** movably disposed inside the main base **3341** and adapted for insertions of the upper stem **331** and the lower stem **332,** a positioning case **3343** connected to the lower stem **332** and located in the operating unit **3342,** an engaging case **3344** located relative to the positioning case **3343,** an elastic unit **3345** disposed between the positioning case **3343** and the engaging case **3344** and inserted into the sliding trough **3311** to be engaged with the fixing notches **33120,** and a first spring unit **3346** disposed on the operating unit **3342** for pushing the operating unit **3342** to the engaging case **3344** in order to position the engaging case **3344** and fix the lower stem **332.**

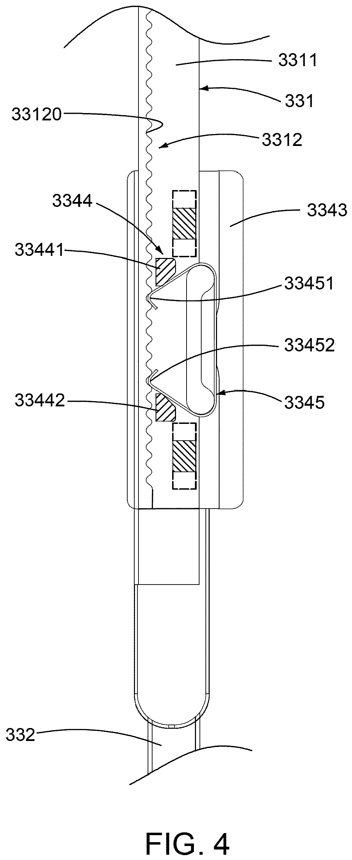

Referring to Fig. **4****,** the elastic unit **3345** has a first end **33451** and a second end **33452** respectively formed on two opposite ends thereof. The first end **33451** and the second end **33452** are engaged with different fixing notches **33120** respectively. The engaging case **3344** has a first engaging part **33441** capable of restricting the first end **33451,** and a second engaging part **33442** capable of restricting the second end **33452.** In this embodiment, as shown in Fig. **2A****,** the engaging case **3344** has an engaging recess **33440** recessedly formed on a surface of the engaging case **3344.** The operating unit **3342** has a protruding part **33420** protruding from a surface of the operating unit **3342.** The protruding part **33420** is capable of being inserted into the engaging recess **33440** when the operating unit **3342** is pushed by the first spring unit **3346.**

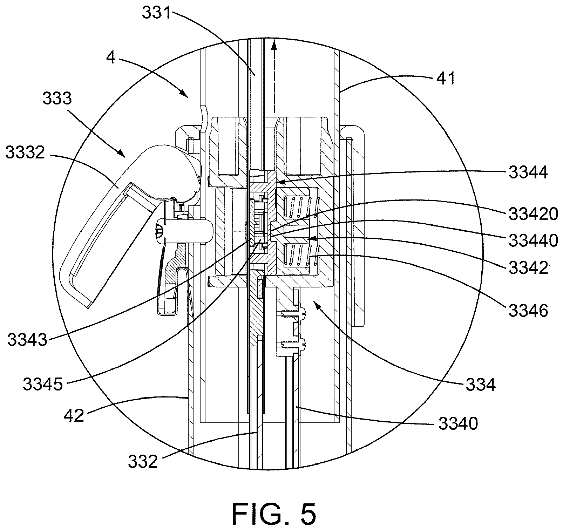

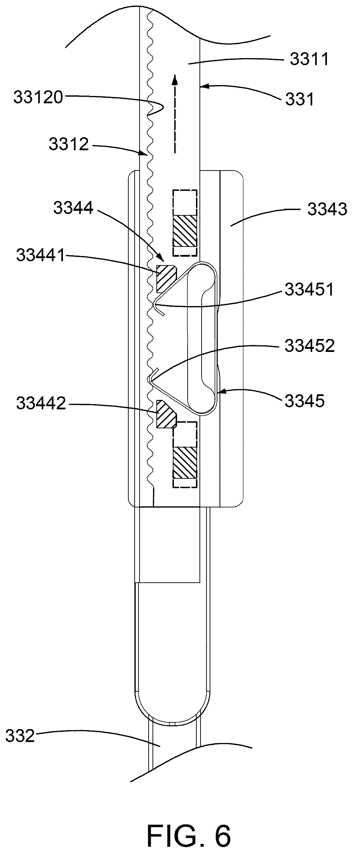

Referring to Fig. **5****,** during executing the adjustment of the full length of the main frame **4,** the locking unit **3332** is loosened to allow the first spring unit **3346** to push the operating unit **3342** to the engaging case **3344** until the protruding part **33420** of the operating unit **3342** is inserted into the engaging recess **33440** of the engaging case **3344** to thereby position the engaging case **3344** and fix the lower stem **332.** After the lower stem **332** is fastened by the engagement of the engaging case **3344** and the operating unit **3342,** the upper frame **41** is moved to simultaneously carry out a movement of the upper stem **331.** Referring to Fig. **5** and Fig. **6****,** when the upper stem **331** is driven by the upper frame **41** to move upwards in order to increase the full length of the main frame **4,** the upper stem **331** activates the elastic unit **3345** to move upwards synchronously owing to the engagement of the first end **33451** and the second end **33452** with the fixing notches **33120.** At the same time, the first end **33451** is restricted by the first engaging part **33441** to reduce the engaging force of the elastic unit **3345** whereby the elastic unit **3345** is forced to stay at the original place, and that facilitates the upward movement of the upper stem **331.** When the adjustment is finished and the upper stem **331** stops moving, the first end **33451** and the second end **33452** are engaged with another fixing notches **33120** again.

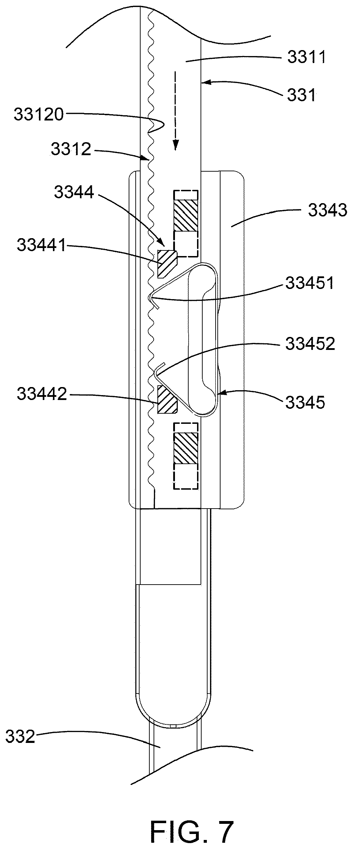

On the contrary, referring to Fig.**5** and Fig. **7****,** when the upper stem **331** is driven by the upper frame **41** to move downwards in order to reduce the full length of the main frame **4,** the upper stem **331** also activates the elastic unit **3345** to move downwards. At the same time, the second end **33452** is restricted by the second engaging part **33442** to reduce the engaging force of the elastic unit **3345** whereby the elastic unit **3345** is forced to stay at the original place, and that facilitates the downward movement of the upper stem **331.** When the adjustment is finished and the upper stem **331** stops moving, the first end **33451** and the second end **33452** are engaged with another fixing notches **33120** again. Thus, the quick adjustment of the full length of the main frame **4** is attained and the convenience of use is increased effectively.

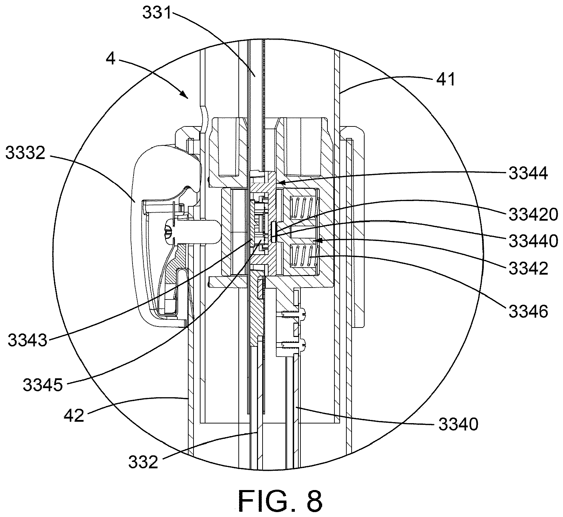

Referring to Fig. **8****,** after the adjustment of the full length of the main frame **4** is completed, the locking unit **3332** is fastened to be inserted into the lower frame **42** and the upper frame **41** to further push the operating unit **3342** toward a direction opposite to the engaging case **3344,** and therefore force the operating unit **3342** to be separated from the engaging case **3344,** namely the protruding part **33420** leaves the engaging recess **33440** to release the engaging case **3344** and the lower stem **332.** Thus, the lower stem **332** is movable with the movement of the upper stem **331.** Hence, the upper stem **331** which is triggered by the brake handle **31** can activate the lower stem **332** synchronously to further stimulate the brake member **32** to execute a braking action.

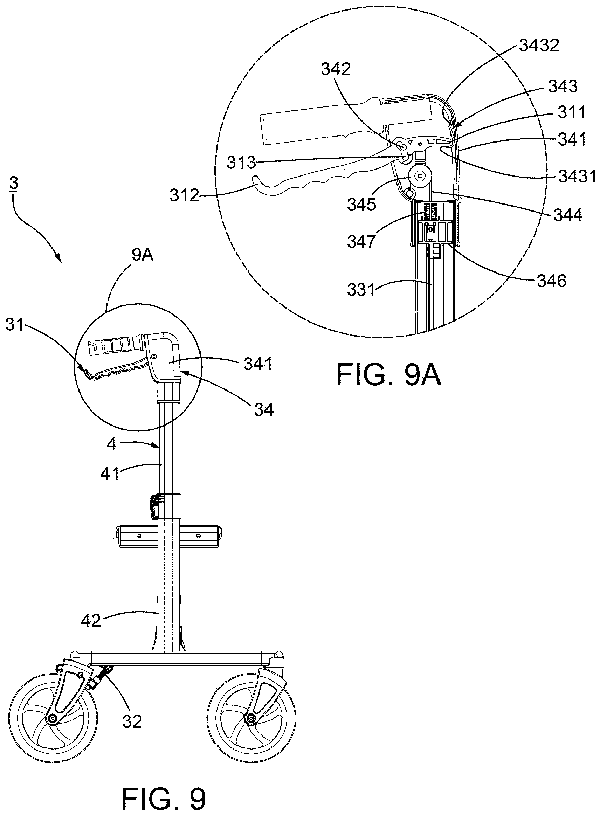

Referring to Fig. **9** and Fig. **9A** show a second preferred embodiment of a hidden braking device **3** of this invention. The correlated elements, the concatenation of elements, the operation and objectives of the second preferred embodiment are the same as those of the first preferred embodiment. This embodiment is characterised in that a brake control set **34** is disposed between the upper stem **331** and the brake handle **31.** The brake handle **31** has a front end **311,** a rear end **312** opposite to the front end **311,** and a slot **313** formed between the front end **311** and the rear end **312.** The rear end **312** is movable between a neutral position, a normal braking position, and a brake locking position. The brake control set **34** has a housing **341** fixed to the upper frame **41,** a shaft **342** fixed to the housing **341** and penetrating the slot **313,** a securing unit **343** disposed inside the housing **341,** a connecting line **344** connected to the upper stem **331** and the housing **341** and driven by the brake handle **31,** a pulley **345** disposed on the brake handle **31** and allowing the connecting line **344** to pass around and then being fixed to the housing **341** to thereby reduce the abrasion of the connecting line **344** caused during a braking action, a stem base **346** disposed on the upper stem **331** and connected to the connecting line **344,** and a second spring unit **347** disposed between the stem base **346** and the housing **341.** The securing unit **343** has a first limiting recess **3431** and a second limiting recess **3432** formed on two opposite ends respectively. Further, the second spring unit **347** is capable of pushing the stem base **346** toward a direction opposite to the pulley **345** in order that the connecting line **344** remains taut, thereby smoothing the braking action.

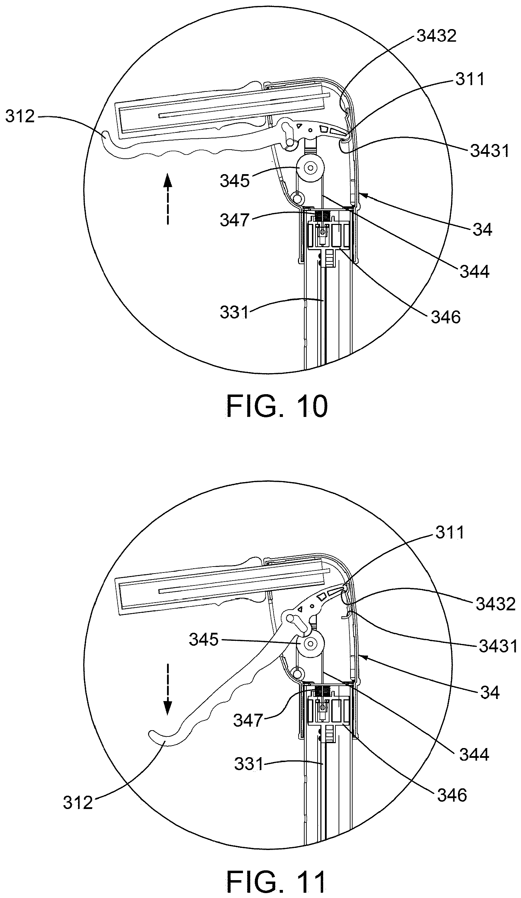

Referring to Fig. **9,** Fig. **9A****,** before a normal braking action is executed, the rear end **312** is positioned at the neutral position and the front end **311** is located in the first limiting recess **3431.** Referring to Fig. **10****,** in order to execute the normal braking action, the user grips the brake handle **31** to move the rear end **312** to the normal braking position, namely the rear end **312** moves upwards, and simultaneously the front end **311** carries out an upward movement of the pulley **345** to pull the connecting line **344** and the stem base **346** upwards whereby the upper stem **331** is also driven to move upwards so as to activate the lower stem **332** (not shown) and the brake member **32** together to execute the normal braking action. When releasing the brake handle **31,** the second spring unit **347** pushes the stem base **346** toward the direction opposite to the pulley **345** to thereby tighten the connecting line **344** and move the pulley **345** downwards simultaneously whereby the rear end **312** returns to the neutral position and the normal braking action is stopped.

Referring to Fig. **9** and Fig. **11****,** in order to fasten the brake handle **31** so as to execute an uninterrupted braking action, the user presses the rear end **312** downwards to position the rear end **312** at the brake locking position and simultaneously move the front end **311** from the first limiting recess **3431** to the second limiting recess **3432.** The upward movement of the front end **311** moves the pulley **345** upwards and further pulls the connecting line **344,** the stem base **346,** the upper stem **331** and the lower stem **332** (not shown) upwards whereby the brake member **32** is then activated to attain the uninterrupted braking action. When the user loosens the brake handle **31,** the braking action is still maintained because the front end **311** is positioned in the second limiting recess **3432** and that allows the rear end **312** to maintain at the brake locking position. Thus, the brake member **32** is triggered continuously, thereby attaining the uninterrupted braking action. On the contrary, when the front end **311** is moved from the second limiting recess **3432** to the first limiting recess **3431,** the rear end **312** returns to the neutral position as shown in Fig. **9A****,** the braking action will be stopped while the user loosens the brake handle **31.** Therefore, the uninterrupted braking action can be applied or stopped by engaging the front end **311** with the second limiting recess **3432** or the first limiting recess **3431,** thereby attaining an effect of multiple use.

To sum up, the hidden braking device of this invention takes advantages of the locking set and the adjusting set to adjust the full length of the main frame quickly. When loosening the locking unit, the first spring unit pushes the operating unit to allow the operating unit to position the engaging case and further fasten the lower stem. And then, the upper frame is adjusted to move the upper stem simultaneously. When the upper stem is moved, the elastic unit is constrained by the engaging case so as to reduce the engaging force of the elastic unit, and that facilitates the movement of the upper stem, thereby attaining the quick adjustment of the full length of the main frame and increasing the convenience of use. Moreover, the brake control set is adapted to change the braking action into the normal braking action or the uninterrupted braking action by situating the front end in the first limiting recess or the second limiting recess, thereby attaining the effect of multiple use.

While the embodiments of this invention are shown and described, it is understood that further variations and modifications may be made without departing from the scope of this invention. The invention is only limited within the scope of the appended claims.

## Claims

1. A hidden braking device (3) comprising a brake handle (31), a brake member (32) adapted to control a rotation of a wheel set (B), a connecting member (33) connected to said brake handle (31) and said brake member (32), and a main frame (4) disposed between said brake handle (31) and said wheel set (B), wherein said connecting member (33) is disposed inside said main frame (4), said main frame (4) including a lower frame (42) and an upper frame (41) sliding relative to said lower frame (42) to attain an adjustment of a full length of said main frame (4),
said connecting member (33) including an upper stem (331) connected to said brake handle (31) and a lower stem (332) connected to said brake member (32),
**characterised in that** said connecting member (33) includes a locking set (333) disposed at an end of said lower frame (42) where said upper frame (41) is inserted and an adjusting set (334) connected to said upper stem (331) and said lower stem (332), said upper stem (331) including a sliding trough (3311) adapted for an insertion of said lower stem (332) and a fixing trough (3312) with a plurality of fixing notches (33120) formed on a surface of said sliding trough (3311), said locking set (333) including a locking body (3331) disposed on said end of said lower frame (42) and a locking unit (3332) pivotally connected to said locking body (3331) and capable of triggering a movement of an operating unit (3342) of said adjusting set (334), said adjusting set (334) including a fixing rod (3340) disposed on said lower frame (42), a main base (3341) fixed to said fixing rod (3340), said operating unit (3342) movably disposed inside said main base (3341) and adapted for insertions of said upper stem (331) and said lower stem (332), a positioning case (3343) connected to said lower stem (332) and located in said operating unit (3342), an engaging case (3344) disposed relative to said positioning case (3343), an elastic unit (3345) disposed between said positioning case (3343) and said engaging case (3344) and having a first end (33451) and a second end (33452) engaged with different ones of said plurality of fixing notches (33120), and a first spring unit (3346) disposed on said operating unit (3342) and capable of pushing said operating unit (3342) to said engaging case (3344) to thereby position said engaging case (3344), said engaging case (3344) including a first engaging part (33441) capable of restricting said first end (33451) of said elastic unit (3345) and a second engaging part (33442) capable of restricting said second end (33452) of said elastic unit (3345) when said main frame (4) operates the adjustment of said full length.

2. The hidden braking device (3) as claimed in claim 1, further comprising a brake control set (34) disposed between said upper stem (331) and said brake handle (31), said brake handle (31) having a front end (311), a rear end (312) opposite to said front end (311), and a slot (313) formed between said front end (311) and said rear end (312), said rear end (312) being movable between a neutral position, a normal braking position, and a brake locking position, said brake control set (34) including a housing (341) fixed to said upper frame (41), a shaft (342) fixed to said housing (341) and penetrating said slot (313) of said brake handle (31), a securing unit (343) disposed inside said housing (341), and a connecting line (344) connected to said upper stem (331) and said housing (341) and driven by said brake handle (31), said securing unit (343) including a first limiting recess (3431) and a second limiting recess (3432) formed above said first limiting recess (3431), said front end (311) of said brake handle (31) moving from said first limiting recess (3431) to said second limiting recess (3432) when said rear end (312) of said brake handle (31) assumes said brake locking position.

3. The hidden braking device (3) as claimed in claim 2, further comprising a pulley (345) disposed on said brake handle (31), said connecting line (344) passing around said pulley (345) and then being fixed to said housing (341).

4. The hidden braking device (3) as claimed in claim 2, wherein said brake control set (34) includes a stem base (346) disposed on said upper stem (331) and connected to said connecting line (344) and a second spring unit (347) disposed between said stem base (346) and said housing (341).

5. The hidden braking device (3) as claimed in claim 1 or 2, further comprising an engaging recess (33440) recessedly formed on a surface of said engaging case (3344) and a protruding part (33420) projecting from a surface of said operating unit (3342), said protruding part (33420) being adapted to be inserted into said engaging recess (33440) when said operating unit (3342) is pushed by said first spring unit (3346).

## Patentansprüche

1. Verborgene Bremsvorrichtung (3), umfassend einen Bremshebel (31), ein Bremselement (32), das ausgelegt ist, um eine Rotation eines Radsatzes (B) zu steuern, ein Verbindungselement (33), das mit dem Bremshebel (31) und dem Bremselement (32) verbunden ist, und einen Hauptrahmen (4), der zwischen dem Bremshebel (31) und dem Radsatz (B) angeordnet ist, wobei das Verbindungselement (33) innerhalb des Hauptrahmens (4) angeordnet ist, wobei der Hauptrahmen (4) einen unteren Rahmen (42) und einen oberen Rahmen (41) beinhaltet, der mit Bezug auf den unteren Rahmen (42) gleitet, um eine Einstellung einer vollen Länge des Hauptrahmens (4) zu erzielen,
wobei das Verbindungselement (33) einen oberen Schaft (331) umfasst, der mit dem Bremshebel (31) verbunden ist, und einen unteren Schaft (332), der mit dem Bremselement (32) verbunden ist,
**dadurch gekennzeichnet, dass** das Verbindungselement (33) einen Verriegelungssatz (333) beinhaltet, der an einem Ende des unteren Rahmens (42) angeordnet ist, wo der obere Rahmen (41) eingeführt ist, und einen Einstellungssatz (334), der mit dem oberen Schaft (331) und dem unteren Schaft (332) verbunden ist, wobei der obere Schaft (331) eine Gleitmulde (3311) beinhaltet, die ausgelegt ist für eine Einführung des unteren Schafts (332), und eine Befestigungsmulde (3312) mit einer Vielzahl von Befestigungskerben (33120), die auf einer Fläche der Gleitmulde (3311) gebildet ist, wobei der Verriegelungssatz (333) einen Verriegelungskörper (3331) beinhaltet, der auf dem Ende des unteren Rahmens (42) angeordnet ist, und eine Verriegelungseinheit (3332), die schwenkend mit dem Verriegelungskörper (3331) verbunden und dazu in der Lage ist, eine Bewegung einer Betriebseinheit (3342) des Einstellungssatzes (334) auszulösen, wobei der Einstellungssatz (334) eine Befestigungsstange (3340) beinhaltet, die auf dem unteren Rahmen (42) angeordnet ist, eine Hauptbasis (3341), die an die Befestigungsstange (3340) befestigt ist, wobei die Betriebseinheit (3342) innerhalb der Hauptbasis (3341) beweglich angeordnet und ausgelegt ist für Einführungen des oberen Schafts (331) und des unteren Schafts (332), einen Positionierungskasten (3343), der mit dem unteren Schaft (332) verbunden ist und sich in der Betriebseinheit (3342) befindet, einen Eingriffskasten (3344), der mit Bezug auf den Positionierungskasten (3343) angeordnet ist, eine elastische Einheit (3345), die zwischen dem Positionierungskasten (3343) und dem Eingriffsbehälter (3344) angeordnet ist und ein erstes Ende (33451) und ein zweites Ende (33452) aufweist, die mit verschiedenen der Vielzahl von Befestigungskerben (33120) eingegriffen sind, und eine erste Federeinheit (3346), die auf der Betriebseinheit (3342) angeordnet und dazu in der Lage ist, die Betriebseinheit (3342) in den Eingriffskasten (3344) zu schieben, um dadurch den Eingriffskasten (3344) zu positionieren, wobei der Eingriffskasten (3344) einen ersten Eingriffsteil (33441) beinhaltet, der dazu in der Lage ist, das erste Ende (33451) der elastischen Einheit (3345) zu begrenzen, und einen zweiten Eingriffsteil (33442), der dazu in der Lage ist, das zweite Ende (33452) der elastischen Einheit (3345) zu begrenzen, wenn der Hauptrahmen (4) die Einstellung der vollen Länge betreibt.

2. Verborgene Bremsvorrichtung (3) nach Anspruch 1, weiter umfassend einen Bremssteuersatz (34), der zwischen dem oberen Schaft (331) und dem Bremshebel (31) angeordnet ist, wobei der Bremshebel (31) ein vorderes Ende (311), ein hinteres Ende (312) gegenüber dem vorderen Ende (311) und einen Schlitz (313) aufweist, der zwischen dem vorderen Ende (311) und dem hinteren Ende (312) gebildet ist, wobei das hintere Ende (312) beweglich zwischen einer neutralen Position, einer normalen Bremsposition und einer Bremsverriegelungsposition ist, wobei der Bremssteuersatz (34) ein Gehäuse (341) beinhaltet, das an den oberen Rahmen (41) befestigt ist, einen Schaft (342), der an das Gehäuse (341) befestigt ist und in den Schlitz (313) des Bremshebels (31) eindringt, eine Sicherungseinheit (343), die innerhalb des Gehäuses (341) angeordnet ist, und eine Verbindungslinie (344), die mit dem oberen Schaft (331) und dem Gehäuse (341) verbunden und durch den Bremshebel (31) angetrieben ist, wobei die Sicherungseinheit (343) eine erste begrenzende Aussparung (3431) und eine zweite begrenzende Aussparung (3432) beinhaltet, die über der ersten begrenzenden Aussparung (3431) gebildet ist, wobei sich das vordere Ende (311) des Bremshebels (31) von der ersten begrenzenden Aussparung (3431) in die zweite begrenzende Aussparung (3432) bewegt, wenn das hintere Ende (312) des Bremshebels (31) die Bremsverriegelungsposition einnimmt.

3. Verborgene Bremsvorrichtung (3) nach Anspruch 2, weiter umfassend eine Rolle (345), die auf dem Bremshebel (31) angeordnet ist, wobei die Verbindungslinie (344) um die Rolle (345) verläuft und dann an das Gehäuse (341) befestigt ist.

4. Verborgene Bremsvorrichtung (3) nach Anspruch 2, wobei der Bremssteuersatz (34) eine Schaftbasis (346) beinhaltet, die auf dem oberen Schaft (331) angeordnet und mit der Verbindunglinie (344) verbunden ist, und eine zweite Federeinheit (347), die zwischen der Schaftbasis (346) und dem Gehäuse (341) angeordnet ist.

5. Verborgene Bremsvorrichtung (3) nach Anspruch 1 oder 2, weiter umfassend eine Eingriffsaussparung (33440), die versenkt auf einer Fläche des Eingriffskastens (3344) gebildet ist, und einen vorspringenden Teil (33420), der von einer Fläche der Betriebseinheit (3342) vorspringt, wobei der vorspringende Teil (33420) ausgelegt ist, um in die Eingriffsaussparung (33440) eingeführt zu werden, wenn die Betriebseinheit (3342) durch die erste Federeinheit (3346) geschoben wird.

## Revendications

1. Dispositif de freinage caché (3) comprenant une poignée de frein (31), un élément de frein (32) conçu pour commander une rotation d'un ensemble roue (B), un élément de liaison (33) relié à ladite poignée de frein (31) et audit élément de frein (32), et un cadre principal (4) disposé entre ladite poignée de frein (31) et ledit ensemble roue (B), ledit élément de liaison (33) étant disposé à l'intérieur dudit cadre principal (4), ledit cadre principal (4) comprenant un cadre inférieur (42) et un cadre supérieur (41) coulissant par rapport audit cadre inférieur (42) pour réaliser un ajustement d'une longueur totale dudit cadre principal (4),
ledit élément de liaison (33) comprenant une tige supérieure (331) reliée à ladite poignée de frein (31) et une tige inférieure (332) reliée audit élément de frein (32),
**caractérisé par le fait que** ledit élément de liaison (33) comprend un ensemble verrouillage (333) disposé à une extrémité dudit cadre inférieur (42) où ledit cadre supérieur (41) est inséré et un ensemble réglage (334) relié à ladite tige supérieure (331) et ladite tige inférieure (332), ladite tige supérieure (331) comprenant une auge coulissante (3311) conçue pour une insertion de ladite tige inférieure (332) et une auge de fixation (3312) avec une pluralité d'encoches de fixation (33120) formées sur une surface de ladite auge coulissante (3311), ledit ensemble verrouillage (333) comprenant un corps de verrouillage (3331) disposé sur ladite extrémité dudit cadre inférieur (42) et une unité de verrouillage (3332) reliée de manière pivotante audit corps de verrouillage (3331) et apte à déclencher un mouvement d'une unité d'actionnement (3342) dudit ensemble réglage (334), ledit ensemble réglage (334) comprenant une tige de fixation (3340) disposée sur ledit cadre inférieur (42), une base principale (3341) fixée à ladite tige de fixation (3340), ladite unité d'actionnement (3342) étant disposée de manière déplaçable à l'intérieur de ladite base principale (3341) et conçue pour des insertions de ladite tige supérieure (331) et de ladite tige inférieure (332), un boîtier de positionnement (3343) relié à ladite tige inférieure (332) et situé dans ladite unité d'actionnement (3342), un boîtier d'engagement (3344) disposé par rapport audit boîtier de positionnement (3343), une unité élastique (3345) disposée entre ledit boîtier de positionnement (3343) et ledit boîtier d'engagement (3344) et ayant une première extrémité (33451) et une seconde extrémité (33452) engagées avec des encoches différentes de ladite pluralité d'encoches de fixation (33120), et une première unité de ressort (3346) disposée sur ladite unité d'actionnement (3342) et apte à pousser ladite unité d'actionnement (3342) jusqu'audit boîtier d'engagement (3344) pour ainsi positionner ledit boîtier d'engagement (3344), ledit boîtier d'engagement (3344) comprenant une première partie d'engagement (33441) apte à restreindre ladite première extrémité (33451) de ladite unité élastique (3345) et une seconde partie d'engagement (33442) apte à restreindre ladite seconde extrémité (33452) de ladite unité élastique (3345) lorsque ledit cadre principal (4) opère le réglage de ladite longueur totale.

2. Dispositif de freinage caché (3) selon la revendication 1, comprenant en outre un ensemble commande de frein (34) disposé entre ladite tige supérieure (331) et ladite poignée de frein (31), ladite poignée de frein (31) ayant une extrémité avant (311), une extrémité arrière (312) opposée à ladite extrémité avant (311), et une fente (313) formée entre ladite extrémité avant (311) et ladite extrémité arrière (312), ladite extrémité arrière (312) étant déplaçable entre une position neutre, une position de freinage normal et une position de verrouillage de frein, ledit ensemble commande de frein (34) comprenant un carter (341) fixé audit cadre supérieur (41), un arbre (342) fixé audit carter (341) et pénétrant dans ladite fente (313) de ladite poignée de frein (31), une unité de fixation (343) disposée à l'intérieur dudit carter (341), et une ligne de liaison (344) reliée à ladite tige supérieure (331) et audit carter (341) et entraînée par ladite poignée de frein (31), ladite unité de fixation (343) comprenant un premier évidement de limitation (3431) et un second évidement de limitation (3432) formé au-dessus dudit premier évidement de limitation (3431), ladite extrémité avant (311) de ladite poignée de frein (31) se déplaçant dudit premier évidement de limitation (3431) jusqu'audit second évidement de limitation (3432) lorsque ladite extrémité arrière (312) de ladite poignée de frein (31) adopte ladite position de verrouillage de frein.

3. Dispositif de freinage caché (3) selon la revendication 2, comprenant en outre une poulie (345) disposée sur ladite poignée de frein (31), ladite ligne de liaison (344) passant autour de ladite poulie (345) et étant ensuite fixée audit carter (341).

4. Dispositif de freinage caché (3) selon la revendication 2, dans lequel ledit ensemble commande de frein (34) comprend une base de tige (346) disposée sur ladite tige supérieure (331) et reliée à ladite ligne de liaison (344) et une seconde unité de ressort (347) disposée entre ladite base de tige (346) et ledit carter (341).

5. Dispositif de freinage caché (3) selon la revendication 1 ou 2, comprenant en outre un évidement d'engagement (33440) formé en creux sur une surface dudit boîtier d'engagement (3344) et une partie saillante (33420) faisant saillie à partir d'une surface de ladite unité d'actionnement (3342), ladite partie saillante (33420) étant conçue pour être insérée dans ledit évidement d'engagement (33440) lorsque ladite unité d'actionnement (3342) est poussée par ladite première unité de ressort (3346).
